# EUROPÄISCHE PATENTSCHRIFT

(11) **EP 1 912 854 B1**
(45) Veröffentlichungstag und Bekanntmachung des Hinweises auf die Patenterteilung: **22.07.2009**
(21) Anmeldenummer: 06776649.3
(22) Anmeldetag: 07.08.2006
(51) Int. Cl.: B62J 1/08

(54) **VORRICHTUNG ZUR WINKELEINSTELLUNG EINES NEIGUNGSWINKELS EINES SATTELS**
DEVICE FOR ADJUSTING THE ANGLE OF INCLINATION OF A SADDLE
DISPOSITIF DE REGLAGE DE L'ANGLE D'INCLINAISON D'UNE SELLE

(30) Priorität: 12.08.2005 DE 102005038565
(43) Veröffentlichungstag der Anmeldung: 23.04.2008
(73) Patentinhaber: Ochendalski, Udo, 50226 Frechen (DE)
(72) Erfinder: Ochendalski, Udo, 50226 Frechen (DE)
(74) Vertreter: Maxton Langmaack & Partner
(86) Internationale Anmeldenummer: PCT/EP2006/007792
(87) Internationale Veröffentlichungsnummer: WO 2007/019983

(56) Entgegenhaltungen:
- WO-A-03/074350
- DE-A1- 2 403 423
- DE-A1- 10 044 342
- GB-A- 930 266
- GB-A- 2 288 371
- US-A- 3 933 391
- US-A- 3 992 054
- US-A- 4 155 590
- US-A- 4 180 345
- US-A- 4 275 922
- US-A- 5 466 042
- US-A- 5 547 155
- US-A- 5 722 718
- US-A- 5 823 618
- US-B1- 6 174 027

## Beschreibung

Die Erfindung betrifft eine Vorrichtung zur Winkeleinstellung eines Neigungswinkel eines Sattels, vorzugsweise aus Kunststoff und/oder Metall, für Zweiräder, vorzugsweise Fahrräder, wobei die Vorrichtung zwischen dem Sattel und einem Sattelstützrohr funktional wirksam anordbar ist.

Im Stand der Technik sind unterschiedliche Vorrichtungen zur Einstellung des Neigungswinkels eines Sattels bekannt So wird eine Vorrichtung beschrieben (DE 203 08 663 U1), die grundsätzlich als kompletter Sattel mit einer im Sattel liegenden Verstellvorrichtung für die Einstellung des Neigungswinkels ausgestattet ist. Die Einstellung des Neigungswinkels erfolgt hierbei durch das Lösen zweier Durchsteckschrauben und die dann folgende Einstellung auf Basis eines vorgegebenen stufenförmigen Rasterprofils bei anschließendem Festziehen der zwei Durchsteckschrauben.

Die DE 102 53 575 B3 beschreibt eine Vorrichtung, bei der der Sattel mit Hilfe eines mit dem Fahrradrahmen verbundenen Kräftedreiecks in Neigung und Höhe stufenlos verstellbar ist. Ein Fahrer kann mit Hilfe eines Verstellelements, welches eine Verschiebung des Kräftedreiecks bewirkt, die Sitzposition variieren. Dabei ändert sich die Sitzposition durch das Verschieben des in Schwenklagern gelagerten Dreiecks, wodurch gleichzeitig immer die Höhe, die Neigung des Sattels sowie der Schwerpunkt geändert werden kann.

Die DE 196 06 801 A1 zeigt eine Vorrichtung für einen Fahrradsattel mit variabler Neigungseinstellung des Sattels durch eine fernauslösbare Gasfeder. Die Vorrichtung besteht dabei aus einem speziellen Sattel inklusive Stützrohr und einer Gasfeder die am Sattelende und dem Stützrohr befestigt ist. Mittels zum Lenker verlegter Auslöseleitung kann die Gasfeder vom Fahrer in der Länge verändert werden, wodurch sich der Neigungswinkel des Sattels verändern lässt.

In der DE 100 44 342 A1 wird eine Sitzflächenanpassung für Fortbewegungsmittel mit Pedalantrieb beschreiben, wobei die Sitzfläche relativ zum Pedaltretlager und zum Rahmen verschoben werden kann. In einer Variante ist ein Schneckenradgetriebe als Beispiel für eine Sattelneigungseinstellung gezeigt, womit eine Sattelreferenzfläche um 30 Grad von der Mittelposition geneigt werden kann. Nach Einstellung des Sattelneigungswinkels wird der Sattelträger mittels einer Feststellschraube fixiert.

Die GB 2 288 371 A beschreibt eine Sattelstütze insbesondere für ein fahrradähnliches Trainingsgerät mit einer Stellschraubenanordnung zum Verstellen und Feststellen der Sattelneigung.

Die US 5,823,610 zeigt einen Sattel mit einer unteren Klemmschiene und einer oberen Klemmschiene, die mittels eines Befestigungsbolzen gehalten werden. Mittels der Klemmschienen, die eine Rasterung aufweisen, kann der Sattel in unterschiedliche Neigungen verstellt werden.

Die GB 930 266 offenbart eine Vorrichtung zur Befestigung eines Sattels insbesondere bei Fahrrädern, wobei das Sattelstützrohr einen Kopf aufweist, welcher teilweise ein Gewinde aufweist, in welches eine gewindeartig ausgebildete Einstellvorrichtung eingreift, die in einem Halter aufgenommen ist, der mit Befestigungsplatten verbunden ist, welche letztendlich dazu dienen, die Stangen eines Sattels zu fixieren. Diese Befestigungsplatten als auch die entsprechenden Gegenplatten sind dabei im Übrigen lagerartig mit dem Sattelstützkopf unter Einsatz von elastischen Scheiben gehalten.

Bei den meisten Fahrrädern mit überwiegend sportlichen Charakter fehlt die Möglichkeit einer Einstellung des Neigungswinkels des Sattels gänzlich, obwohl diese Fahrräder von der Preislage, von dem verwendeten Material und aufgrund der bei Sporteinsätzen häufig geforderten Optimierungsmöglichkeiten eine präzise Einstellung des Neigungswinkels des Sattels durchaus erwarten lassen. Hierbei wäre gerade die weitere Verwendung auch des meist hochwertigen Materials, wie z. B. Stützrohr und Sattel, wünschenswert.

Insbesondere bei ambitionierten Fahrradsportlem ist eine bequeme Sitzhaltung auf dem Fahrrad sehr wichtig. Beispielsweise bei der Verwendung von einem Sattel aus neuestem Material wie beispielsweise Carbon kann dieser Sattel über keine Polsterung verfügen, wie z. B. bei einem Rennrad. Hier ist es dann von besonderer Bedeutung, dass der Neigungswinkels des Sattels eingestellt werden kann, um eine für den Benutzer akzeptable Sitzposition auf dem Fahrrad zu erzielen.

In der Praxis sind die im Stand der Technik bekannten Möglichkeiten zur Einstellung des Neigungswinkels eines Sattels nicht optimal. Einerseits erfordern die bekannten Vorrichtungen häufig ein bestimmtes Fahrradmodell, an dem die Vorrichtung passend anzubringen ist, oder es werden gar gravierende Umbaumaßnahmen am Rahmen notwendig. Andere Vorrichtungen werden als komplett auszuwechselnder Sattel, teilweise auch zusätzlich inklusive eines neuen Stützrohres, angeboten, so dass ein - durchaus guter - vorhandener Sattel nicht weiter genutzt werden kann. Insbesondere bei Sporträdem, bei denen extrem auf Material und Gewicht geachtet wird, sind viele der bekannten Vorrichtungen nicht praktikabel einsetzbar. Weiterhin sind Vorrichtungen bekannt, wo der Neigungswinkel des Sattels eingestellt werden muss, wobei mindestens eine, vorzugsweise sogar zwei Fixierschrauben erst gelöst werden müssen und der Sattel dann in den gewünschten Neigungswinkel gebracht und in diesem Neigungswinkel auch zunächst manuell festgehalten werden muss, bevor dann die Fixierschrauben wieder entsprechend zugezogen werden müssen, damit der Sattel dann in diesem eingestelltem Neigungswinkel auch fixiert ist.

Die Einstellung ist daher äußerst kompliziert bzw. problematisch, da man mit einer Hand den Sattel in einem bestimmten Neigungswinkel halten muss und mit der anderen Hand dann die Fixierschrauben festziehen muss oder sogar auf eine weitere Person angewiesen ist, die bei der Einstellung hilft. Mit den oben beschriebenen bekannten Vorrichtungen ist daher, insbesondere mit einer vorgesehenen Rasterung oder einer vorgesehenen Schraubenklemmung, die Einstellung eines exakten Neigungswinkels bei einem Sattel nicht möglich. Im Ergebnis sind daher die im Stand der Technik bekannten Vorrichtungen noch nicht optimal ausgestaltet.

Der Erfindung liegt daher die Aufgabe zugrunde, eine Vorrichtung der eingangs genannten Art derart auszugestalten und weiterzubilden, dass die Einstellung des Neigungswinkels des Sattels verbessert, insbesondere vereinfacht ist.

Die zuvor aufgezeigte Aufgabe wird gelöst durch eine Vorrichtung zur Winkeleinstellung eines Neigungswinkels eines Sattels, vorzugsweise aus Kunststoff und/oder Metall, für Zweiräder, vorzugsweise für Fahrräder, mit den Merkmalen des Anspruches 1.

Der Grundgedanke der Erfindung liegt daher darin, eine einfache Möglichkeit anzugeben, insbesondere auch das bereits hochwertige Material eines bereits vorhandenen Fahrrades in Verbindung mit einer adaptiven erfindungsgemäßen Vorrichtung weiter zu verwenden und dabei eine präzise, stufenlose Einstellung des Neigungswinkels durch die getriebeähnlich ausgebildete Vorrichtung als herausragenden Vorteil zu realisieren. Dadurch, dass die Vorrichtung nun getriebeähnlich ausgebildet ist, wird zunächst eine einfache und präzise Einstellung des Neigungswinkels des Sattels realisiert, insbesondere ist hierdurch eine stufenlose Einstellung des Neigungswinkels auf besonders einfache Art und Weise realisierbar. Weiterhin ist die Vorrichtung nun so auch - adaptiv - als separate Vorrichtung ausbildbar und zwischen einem Sattel und einem Stützrohr anordbar, so dass bereits existierende Fahrräder leicht umgerüstet werden können. Denkbar ist allerdings auch, eine derartige Vorrichtung direkt an einem Sattel und/oder an einem Stützrohr (Sattelstützrohr) derart anzuordnen, dass diese in dem unteren Bereich des Sattels oder dem oberen Bereich des Stützrohres entsprechend "direkt Integriert" ist, also bereits Bestandteil eines Sattels oder eines Stützrohrs ist. Dies ist abhängig vom jeweiligen Anwendungsfall. Mit der erfindungsgemäßen Vorrichtung ist die Einstellung des Neigungswinkels des Sattels präzise und besonders einfach einzustellen. Hierdurch kann eine Optimierung der Kraftübertragung während des sportlichen Fahrens, z. B. bei längeren Bergauffahrten, erreicht werden. Mit der erfindungsgemäßen Vorrichtung ist nun ein bestimmter Neigungswinkel des Sattels auf einfache Weise leicht einstellbar und auch entsprechend reproduzierbar, so dass ein sicheres und komfortables Fahrgefühl für den Fahrer realisiert werden kann. Mit Hilfe der erfindungsgemäßen Vorrichtung, die insbesondere bei Tourenfahrten, aber auch bei City- oder Trekkingfahrten zum Einsatz kommen kann, ist die Sitzposition innerhalb der gesamten Körperhaltung auf dem Fahrrad nun justierbar, so dass der Benutzer, also der Fahrer, eine komfortable Sitzposition einnehmen kann und diese sich durch positiv auf die Sicherheit von schwierigen Fahrsituationen auswirkt. Der mit der erfindungsgemäßen Vorrichtung eingestellte Sattel verursacht - anders wie bisher im Stand der Technik - dem Fahrer nunmehr keine Schmerzen mehr, da durch die stufenlose Einstellung der Neigungswinkel des Sattels optimal eingestellt werden kann, was die Fahrsicherheit und den Fahrkomfort entscheidend erhöht. Es sind die oben beschriebenen Nachteile vermieden und entsprechende Vorteile realisiert, die im Folgenden noch näher erläutert werden.

Der Begriff "stufenlose Einstellung" im Sinne der vorliegenden Erfindung ist dahingehend zu verstehen, dass jeder beliebige Neigungswinkel des Sattels mittels der getriebeähnlich ausgebildeten Vorrichtung einstellbar ist. Insbesondere fällt unter den Begriff der stufenlosen Einstellung im Sinne der vorliegenden Erfindung keine Rastung, wie diese aus dem Stand der Technik vielfach bekannt ist. Die stufenlose Einstellung des Neigungswinkels im Sinne der vorliegenden Erfindung erfolgt dabei vorzugsweise in einem Neigungswinkelbereich von 0° bis 360°. Dies ermöglicht in besonders vorteilhafter Weise, dass an der erfindungsgemäßen Vorrichtung eine Haltevorrichtung für die Sattelstreben des durch diese im Neigungswinkel verstellbaren Sattels zur Verfügung gestellt werden kann, welche auch Sattelstreben unterschiedlichen Durchmessers aufnimmt. Hierzu können an der erfindungsgemäßen Vorrichtung Haltemittel angeordnet sein, welche insbesondere zusammen mit einem drehbaren ersten Element zwei Klemmparallelogramme mit unterschiedlichen Abständen und damit zwei Aufnahmen für die Sattelstreben bilden, so dass insbesondere Sattelstrebendurchmesser von 7 mm und 8 mm oder aber 9 mm mit den Haltemitteln an der erfindungsgemäßen Vorrichtung befestigbar sind. Bei der Montage von Sätteln mit unterschiedlichen Sattelstrebendurchmessern kann daher einfach eine Drehung des in der getriebeähnlich ausgebildeten Vorrichtung bewegbar aufgenommenen drehbaren ersten Elementes um beispielsweise etwa 180° erfolgen, so dass dann einfach über das zweite Klemmparallelogramm ein Sattel mit einem anderen Sattelstrebendurchmesser, welcher an den Abstand dieses zweiten Klemmparallelogramms angepasst ist, montiert werden kann.

Das Getriebe der getriebeähnlich ausgebildeten Vorrichtung ist selbsthemmend ausgebildet, wodurch einerseits eine Entkopplung zwischen der Einstellung des Neigungswinkels des Sattels und andererseits der Einstellung der Sattellängsrichtung erfolgt. Dabei kann die Einstellung sowohl der Neigung des Sattels als auch der Längseinstellung des Sattels hochgradig genau erfolgen, da aufgrund der selbsthemmenden Ausbildung des Getriebes durch insbesondere einen formschlüssigen Eingriff der einzelnen Getriebeteile einerseits der Neigungswinkel bis zu unter 1° genau eingestellt werden kann, wobei diese Einstellung aufgrund der Selbsthemmung fixiert ist, und dabei durch beispielsweise Lösen der Haltemittel, welche bevorzugt an dem drehbaren ersten Element der getriebeähnlichen Vorrichtung direkt angeordnet sind, die Längseinstellung des Sattels erfolgen kann, ohne dass gleichzeitig der Neigungswinkel verändert wird. Dies stellt eine wesentliche Verbesserung im Unterschied zu dem aus dem Stand der Technik bekannten Sattelstützen dar, bei welchen in aller Regel gleichzeitig durch Lösen von Haltemitteln, welche die Sattelstreben eines Sattels halten, der Neigungswinkel als auch die Längseinstellung desselben einzustellen ist, so dass eine genaue Justierung schlicht nicht ermöglicht ist.

Das drehbare erste Element ist vorzugsweise zylinderförmig ausgebildet, und ist als Drehtrommel mit einem auf der äußeren Umfangsfläche desselben angeordneten Gewinde ausgebildet. Das Gewinde kann zwar auf der gesamten äußeren Umfangsfläche der Drehtrommel angeordnet sein, es kann auch nur auf Teilen derselben angeordnet sein, erfindungsgemäß ist es in einem mittleren Teilbereich der Außenumfangsfläche angeordnet. Durch die zylinderförmige Ausbildung der Drehtrommel ist einfach eine Einstellung des Neigungswinkels der erfindungsgemäßen Vorrichtung stufenlos und sicher fixiert über den gesamten Bereich von 0° bis 360° ermöglicht. Erfindungsgemäß ist das drehbare erste Element rotationssymmetrisch ausgebildet, um eben eine Einstellung des Neigungswinkels in einem Bereich zwischen mindestens 0° und 360° zu ermöglichen. Das drehbare erste Element ist dabei vorzugsweise anschlagfrei ausgebildet. Das drehbare erste Element kann beispielsweise in einer nicht erfindungsgemäßen Ausbildung auch in Form eines Zahnrades, bevorzugt in Form eines Kegelzahnrades oder aber eines Stimzahnrades, ausgebildet sein. Das drehbare erste Element ist vorzugsweise frei beweglich in einer Ausnehmung der erfindungsgemäßen Vorrichtung angeordnet, wobei zur sicheren Aufnahme des drehbaren ersten Elementes in der Ausnehmung der Vorrichtung einerseits drauf geachtet werden muss, dass das drehbare erste Element bewegt werden kann, andererseits auch nur geringste Spaltabstände zwischen Außenumfangsfläche des drehbaren ersten Elementes und der Innenumfangsfläche der Ausnehmung vorgesehen sind, um ein freies Spiel des drehbaren ersten Elementes in der Ausnehmung weitestgehend zu vermeiden.

Erfindungsgemäß ist vorgesehen, dass zusätzlich eine Fixierung des ersten Elementes durch einen Klemmsitz des die Ausnehmung aufweisenden Gehäuses der erfindungsgemäßen Vorrichtung erfolgt. Hierdurch kann nach der erfolgten Feineinstellung des Neigungswinkels als auch der hiervon entkoppelten unabhängigen Längseinstellung des Sattels eine zusätzliche Endfixierung erzielt werden, über welche an dem vorzugsweise selbsthemmenden Getriebe der erfindungemäßen Vorrichtung angreifende Kräfte zusätzlich abgeleitet werden können.

Ein besonderer Vorteil in der erfindungemäßen Vorrichtung ist, dass insbesondere bei einer direkten Verbindung der Haltemittel für die Sattelstreben an dem drehbaren ersten Element eine einfach aufgebaute und kleinbauende Vorrichtung erhalten wird, welche auch kostengünstig herzustellen ist.

Das drehbare erste Element wirkt erfindungsgemäß getriebeähnlich mit einer Einstellvorrichtung zusammen. Diese Einstellvorrichtung weist erfindungsgemäß ebenfalls ein Gewinde auf, welches weiter bevorzugt formschlüssig in das auf der Außenumfangsfläche des drehbaren ersten Elementes angeordnete Gewinde eingreift. Besonders bevorzugt ist dabei vorgesehen, dass die Einstellvorrichtung eine Markierung aufweist, mittels welcher die Einstellung des Winkels zielgenau erfolgen kann. Dadurch, dass die Winkelmarkierung auf dem Einstellelement und nicht auf dem drehbaren ersten Element angebracht ist, erfolgt unabhängig von der Gesamtfixierung der erfindungsgemäßen Vorrichtung die Einstellung des Neigungswinkels, wobei weiter bevorzugt bei der vorteilhafterweise erfolgenden weiteren Fixierung des drehbaren ersten Elementes über den Klemmsitz des Gehäuses eine Verstellung des Winkels sicher vermieden wird. Zudem erfolgt vorteilhafter Weise die gradgenaue Einstellung des Neigungswinkels über die auf der Einstellvorrichtung angebrachte Markierung unabhängig von der Aufbringung von zusätzlichen Kräften, wie dies im Stand der Technik beispielsweise durch das Anziehen von Schrauben erfolgt.

Die Winkelskala bzw. Winkelmarkierung kann vorzugsweise auf der Stellvorrichtung in deren Kopfbereich, welcher entweder von Hand angreifbar oder bevorzugt mittels eines Einstellmittels, beispielsweise eines Inbusschlüssels, betätigbar ist, durch Drehung desselben erfolgen. Die Einstellvorrichtung ist im Sinne der vorliegenden Erfindung vorzugsweise feststehend ausgebildet, wohingegen das drehbare erste Element derart ausgebildet ist, dass der Neigungswinkel des Sattels in einem Bereich von mindestens 0° bis 360° angetrieben werden kann.

Eine Sicherung der Einstellvorrichtung kann insbesondere bei einer schraubenartigen Ausbildung derselben dadurch erfolgen, dass im Kopfbereich eine Ausnehmung, insbesondere eine Ringnut, angeordnet ist, in welcher ein von außen durch eine entsprechende Öffnung in dem Gehäuse der Vorrichtung einführbares Sicherungselement in diese Ausnehmung eingreift. Hierdurch wird zudem eine sichere Zuordnung der Einstellvorrichtung zu dem drehbaren ersten Element hergestellt, so dass insbesondere ein formschlüssiges Zusammenwirken dieser Teile der erfindungsgemäßen Vorrichtung sichergestellt ist.

Es gibt nun eine Vielzahl von Möglichkeiten die erfindungsgemäße Vorrichtung in vorteilhafter Art und Weise auszugestalten und weiterzubilden. Hierfür darf zunächst auf die dem Patentanspruch 1 nachgeordneten Patentansprüche verwiesen werden. Im folgenden sollen nun mehrere bevorzugte Ausführungsformen der erfindungsgemäßen Vorrichtung anhand der folgenden Zeichnung und der dazugehörigen Beschreibung näher beschrieben werden. In der Zeichnung zeigt:
- Fig. 1a bis 1c: die erfindungsgemäße Vorrichtung in der bevorzugten ersten Ausführungsform als Explosionszeichnung in schematischer Darstellung bzw. mit teilweise vergrößerten Einzeldarstellungen,
- Fig. 2a bis 2c: die erfindungsgemäße Vorrichtung aus Fig. 1 in perspektivisch unterschiedlichen Ansichten in schematischer Darstellung, angeordnet auf einem Stützrohr,
- Fig. 3: die erfindungsgemäße Vorrichtung aus Fig. 1 in einer seitlichen Ansicht, angeordnet zwischen Stützrohr und einem Sattel in schematischer Darstellung,
- Fig. 4: die erfindungsgemäße Vorrichtung aus Fig. 1 in Seitenansicht in schematischer Funktionsdarstellung ohne Sattel,
- Fig. 5: eine nicht erfindungsgemäße Ausführungsform der erfindungsgemäßen Vorrichtung in Seitenansicht in schematischer Darstellung,
- Fig. 6: eine nicht erfindungsgemäße Ausführungsform der erfindungsgemäßen Vorrichtung in Seitenansicht in schematischer Darstellung, und
- Fig. 7: die erfindungsgemäße Vorrichtung aus Fig. 1 im zusammenmontierten Zustand auf einem Stützrohr, jedoch ohne einen Sattel, aber mit einer vorgesehenen Winkelskala in schematischer Darstellung.

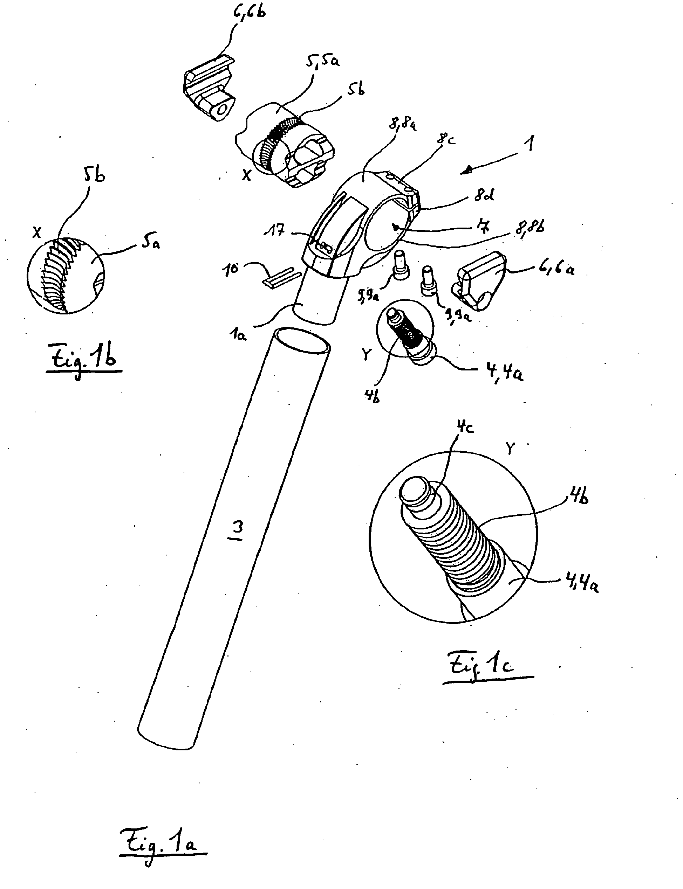

Die Fig. 1 bis 6 zeigen - zumindest teilweise - eine Vorrichtung 1 zur Nelgungswinkeleinstellung bzw. zur Einstellung eines Neigungswinkels eines Sattels 2 eines hier nicht im einzelnen dargestellten Zweirades, vorzugsweise eines Fahrrades. Hierbei ist der Sattel 2 vorzugsweise aus Kunststoff, Leder und/oder Metall hergestellt.

Die hier in den Fig. 1 bis 6 dargestellte Vorrichtung 1 ist zwischen dem Sattel 2 und einem Stützrohr 3 (Sattelstützrohr) funktional wirksam anordbar. Hierbei kann die Vorrichtung 1 als separate einzelne Vorrichtung 1 zwischen einem separaten Sattel 2 und einem Stützrohr 3 angeordnet werden oder - als Alternative - ist auch denkbar, dass die Vorrichtung 1 als integraler Bestandteil eines Sattels 2 oder eines Stützrohres 3 ausgebildet ist. Dies ist abhängig vom jeweiligen Anwendungsfall. Im Ergebnis ist wesentlich, dass die Vorrichtung 1 zwischen dem Sattel 2 und dem Stützrohr 3 funktional wirksam anordbar ist bzw. hier entsprechend ausgebildet ist.

Die eingangs beschriebenen Nachteile sind nun dadurch vermieden, dass die Vorrichtung 1 derart getriebeähnlich ausgebildet ist, so dass mit der Vorrichtung 1 eine stufenlose Einstellung des Neigungswinkels des Sattels 2 ermöglicht ist. Hierdurch werden mehrere entscheidende Vorteile erzielt. Einerseits ist die Vorrichtung 1 manuell leicht handhabbar und damit der entsprechende Neigungswinkel des Sattels 2 auch stufenlos leicht einstellbar und dieser auch leicht jederzeit exakt reproduzierbar. Dies soll im Folgenden noch näher erläutert werden:

Die Fig. 1 bis 3 zeigen nun eine bevorzugte Ausführungsform der Vorrichtung 1. Hierbei ist die Vorrichtung 1 getriebeähnlich ausgebildet und weist ein drehbares erstes Element 5 auf. Das drehbare erste Element 5 ist hier als eine Art Drehtrommel 5a mit im mittleren Bereich vorgesehenen Gewinde 5b ausgebildet, was gut in den Fig.1a und 1b zu erkennen ist. Das Gewinde 5b könnte sich in einer nicht erfindungsgemäßen Ausbildung aber auch über die gesamte Länge der Drehtrommel 5a oder sonstige Teilbereiche derselben erstrecken.

An diesem drehbaren ersten Element 5 ist mittels einer Haltevorrichtung 6 der Sattel 2 befestigbar. Anders ausgedrückt, mit dem drehbaren ersten Element 5, also hier vorzugsweise der Drehtrommel 5a. dreht dann auch die Haltevorrichtung 6 den Sattel 2 zur Einstellung des entsprechenden Neigungswinkels. Die Haltevorrichtung 6 weist hier zwei separate Schenkel 6a und 6b auf, die jeweils mit der Drehtrommel 5a wirksam verbunden werden können, d. h. dreht sich die Drehtrommel 5a, so werden auch die entsprechenden Schenkel 6a bzw. 6b der Haltevorrichtung 6 entsprechend mit verschwenkt, also so dann auch der Neigungswinkel des Sattels 2 eingestellt, da der Sattel 2 entsprechend mit der Haltevorrichtung 6, also den Schenkeln 6a und 6b, entsprechend wirksam verbunden ist bzw. hier befestigt werden kann.

Da die Vorrichtung 1 getriebeähnlich ausgebildet ist, wirkt das erste Element 5 mit einer Einstellvorrichtung 4 zusammen, die hier vorzugsweise als Einstellschraube 4a ausgebildet ist. Die Einstellschraube 4a weist ein Gewinde 4b auf, das mit dem Gewinde 5b des ersten Elementes 5 in Eingriff steht. Insbesondere die Fig. 1b zeigt hier das entsprechend ausgebildete Gewinde 5b des ersten Elementes 5. Gemeinsam bilden die Einstellschraube 4a mit dem Gewinde 4b, gut dargestellt in Fig. 1c, und das drehbare erste Element 5, hier ein Schneckengetriebe.

Das Element 5 und die Einstellschraube 4a sind so ausgebildet, also - allgemeiner ausgedrückt - das Element 5 und eine mit dem Element 5 zusammenwirkende Einstellvorrichtung 4 sind derartig ausgebildet, dass der Eingriff der Gewindegänge konstruktiv selbsthemmend ausgebildet ist. Dies hat den Vorteil, dass bei der Einstellung mit der Einstellvorrichtung 4 der neue gewählte Neigungswinkel sich fest einstellt, ohne dass die Gefahr besteht, dass dieser - während der Einstellung bzw. Montage - sich wieder durch Vibration, Stöße etc. selbsttätig ändert. Vorzugsweise ist also durch das als Drehtrommel 5a ausgebildete erste drehbare Element 5 und die Einstellschraube 4a hier insbesondere ein selbsthemmendes Schneckengetriebe gebildet. Die Einstellvorrichtung 4 selbst könnte auch mit einem weiteren Schraubenschlüssel betätigt werden. Die Vorrichtung 1 ist daher getriebeähnlich, nämlich als selbsthemmendes Getriebe zur Einstellung des Neigungswinkels des Sattels 2, ausgebildet.

Der Vorteil der bevorzugten ersten Ausführungsform liegt insbesondere auch darin, dass mit Hilfe der Einstellvorrichtung 4, vorzugsweise der Einstellschraube 4a, präzise mit der Hand, respektive mit den Fingern, also ohne ein zusätzliches Werkzeug und/oder ohne eine zusätzliche Apparatur der Neigungswinkel des Sattels 2 eingestellt werden kann. Hierdurch wird - wie bereits erwähnt - auch eine leichte und präzise Einstellung des Neigungswinkels des Sattels 2 ermöglicht.

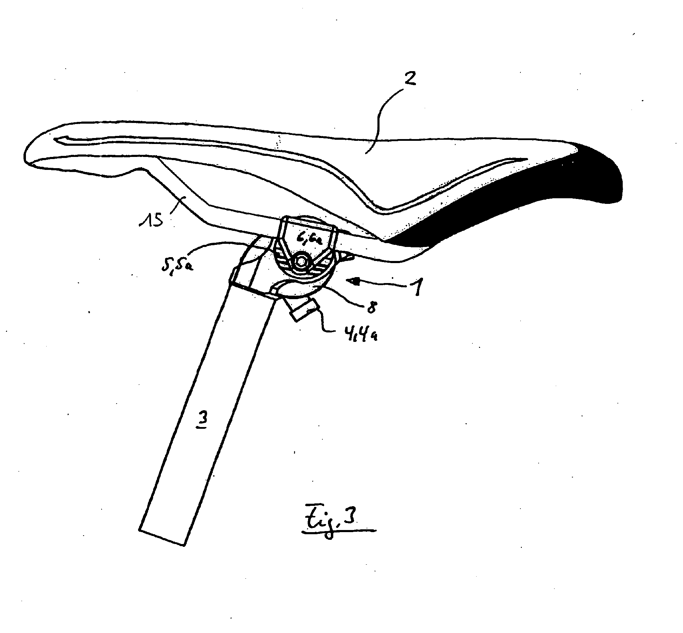

Die Fig. 1 bis 3 zeigen nun die einzelnen Komponenten der Vorrichtung 1 bzw. der übrigen Bauteile. Gut zu erkennen ist auch in Fig. 3 die zwischen dem Sattel 2 und dem Stützrohr 3 angeordnete Vorrichtung 1. Mit Hilfe der Einstellvorrichtung 4 bzw. der Einstellschraube 4a lässt sich die getriebeähnlich ausgebildete Vorrichtung 1 "betätigen", nämlich das erste drehbare Element 5 derartig drehen, dass der Neigungswinkel des Sattels 2 eingestellt werden kann. Die einzelnen Komponenten der Vorrichtung 1 sind in der Explosionsdarstellung in Fig. 1 gut ersichtlich dargestellt.

Gut zu erkennen in Fig. 1a bis 1c ist, dass die Einstellvorrichtung 4 als eine mit dem drehbaren ersten Element 5 in Eingriff stehende Einstellschraube 4a ausgeführt ist und das Gewinde 4b der Einstellschraube 4a mit dem Gewinde 5b des ersten drehbaren Elementes 5, das hier als eine Art Drehtrommel 5a ausgebildet ist, in Eingriff bringbar ist bzw. in Eingriff steht.

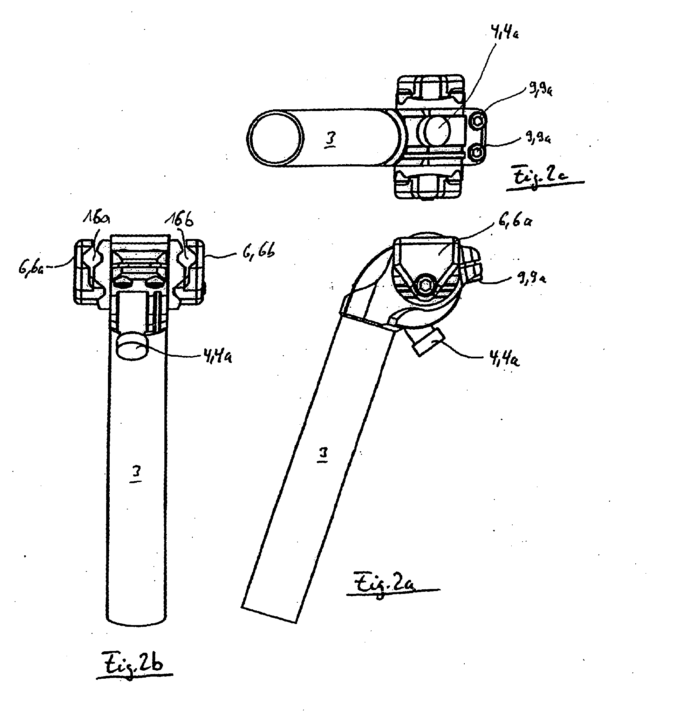

Erfindungsgemäß ist, was aus den Fig. 2a bis 2c gut zu erkennen ist, das drehbare erste Element 5 in eine Ausnehmung 7 eines Gehäuses 8 bewegbar einsetzbar. Hierbei ist das Gehäuse 8 spezifisch ausgebildet, und weist zwei Gehäuseteile bzw. Gehäusebereiche 8a und 8b auf. Die Anordnung des ersten drehbaren Elementes 5 innerhalb der Ausnehmung 7 des Gehäuses 8 ist als Klemmsitz ausgebildet, wobei durch ein passgenaues Einsetzen des Elementes 5 in die Ausnehmung 7, was bereits nahezu spielfrei erfolgt, eine sichere Aufnahme des Elementes 5 zur Verfügung gestellt ist. Hierzu lassen sich die beiden Gehäuseteile 8a und 8b zusammenklemmen. Vorzugsweise ist dann nach Einstellung des Neigungswinkels über den Klemmsitz des Gehäuses 8 das erste Element 5 zusätzlich fixierbar, durch eine separate Fixiervorrichtung 9, nämlich vorzugsweise durch zwei entsprechend ausgebildete Fixierschrauben 9a, die die Flansche 8c und 8d der Gehäuseteile 8a und 8b entsprechend verbinden bzw. dann das erste Element 5 fixieren und verklemmen können.

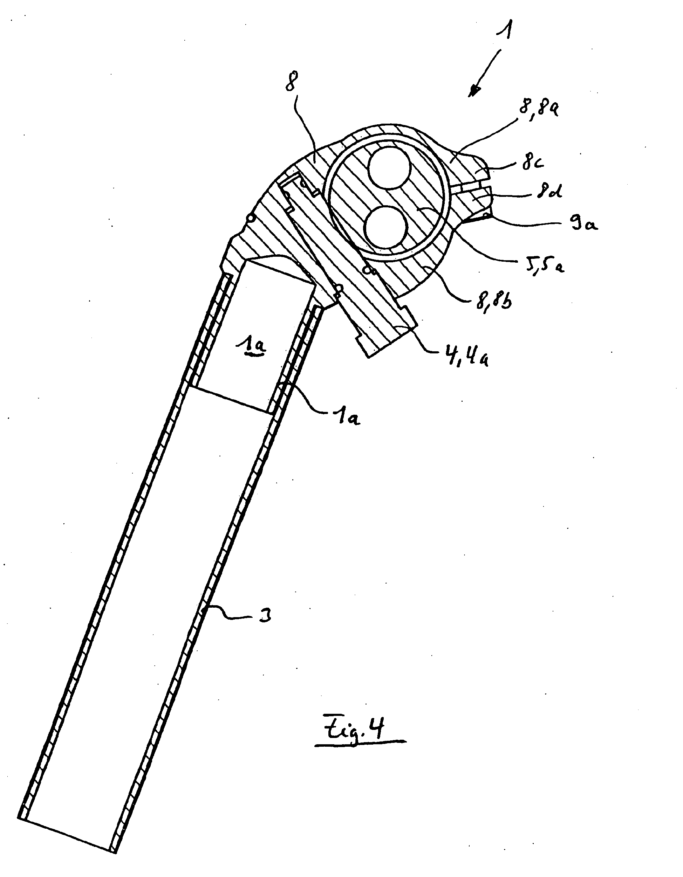

Insbesondere auch die Fig. 4 verdeutlicht hier die Funktionsweise der Vorrichtung 1. Schematisch dargestellt sind hier die Einstellvorrichtung 4, nämlich die Einstellschraube 4a und das erste drehbare Element 5, nämlich die Drehtrommel 5a, die in dem Gehäuse 8, entsprechend in den hier vorgesehenen Ausnehmungen angeordnet sind. Gut zu erkennen sind auch die beiden Gehäusebereiche 8a und 8b bzw. die Flansche 8c und 8d, die über die Fixierschrauben 9a zusammenklemmbar sind, so dass das Element 5 fixierbar ist. Andere Komponenten wie der Sattel bzw. die Haltevorrichtung 6 sind hier nicht im einzelnen dargestellt, sondern lediglich die Anordnung der Vorrichtung 1 mit einem Sattelstützrohradapterabschnitt 1a in dem Stützrohr 3.

Damit die Einstellvorrichtung 4, insbesondere die Einstellschraube 4a auch gesichert werden kann, insbesondere gegen ein ungewolltes Herausrutschen aus der für sie im Gehäuse 8 ausgebildeten Ausnehmung, kann ein Sicherungselement 10 mit einer Nut 4c der Einstellschraube 4a zusammenwirken. Ein entsprechendes Sicherungselement 10, vorzugsweise klammerähnlich ausgebildet und durch eine Ausnehmung 17 des Gehäuses 8 steckbar, um zumindest teilweise mit der Nut 4c in Eingriff zu kommen, ist in Fig. 1 dargestellt.

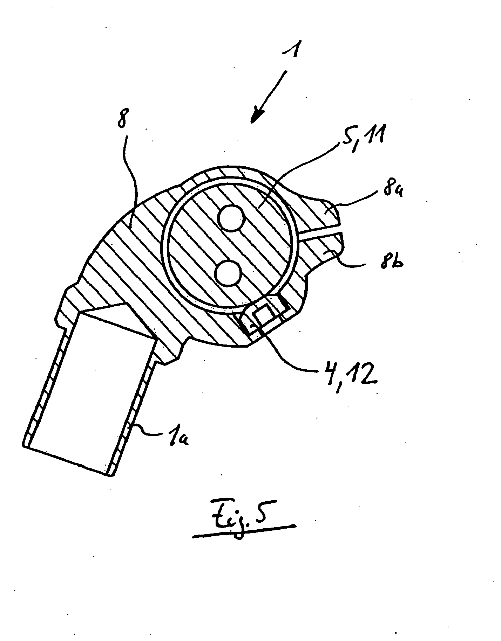

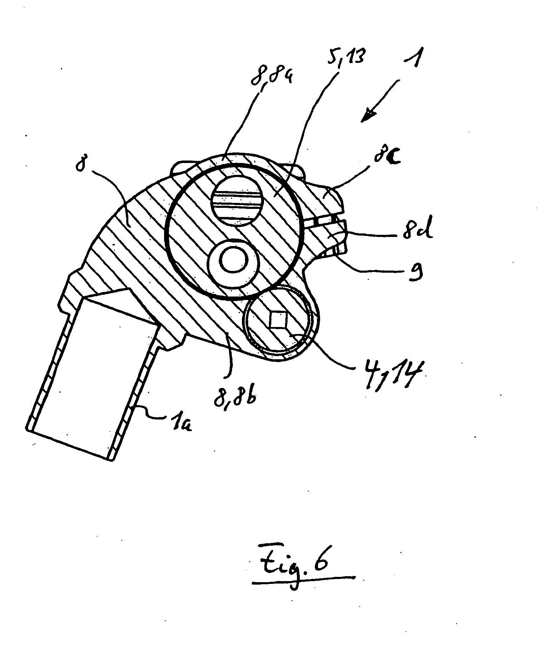

Die Fig. 5 und 6 zeigen zwei nicht erfindungsgemäße Ausführungsformen der erfindungsgemäßen Vorrichtung 1.

Die Fig. 5 zeigt zunächst eine Ausführungsform mit einer Vorrichtung 1 mit zwei Kegelzahnrädern 11 und 12, wobei nunmehr das erste drehbare Element 5 als erstes Kegelzahnrad 11 ausgebildet ist und das zweite Kegelzahnrad 12 so ausgeführt ist, dass dieses gleichzeitig als Einstellvorrichtung 4 benutzbar ist. Vorzugsweise weist das zweite Kegelzahnrad 12 eine entsprechende "Inbusschlüsselkontaktstelle" zur Einstellung des entsprechenden Neigungswinkels auf. Die Drehachsen der beiden Kegelzahnräder 11 und 12 sind vorzugsweise rechtwinklig zueinander angeordnet.

Bei der in Fig. 6 dargestellten Vorrichtung weist das hier realisierte Getriebe zwei Stirnzahnräder 13 und 14 auf, so wie dargestellt. Das erste drehbare Element 5 ist hier also als erstes Stirnzahnrad 13 und die Einstellvorrichtung 4 als zweites Stimzahnrad 14 ausgebildet. Von außen ist ebenfalls vorzugsweise über einen stiftförmigen Eingriff dann hier die entsprechende Einstellfunktion realisiert, so dass durch Drehung des Stimzahnrades 14 das Stimzahnrad 13 verstellt und damit der Neigungswinkels des Sattels eingestellt werden kann. Die Drehachsen der beiden Stirnzahnräder 13 und 14 sind vorzugsweise achsparallel zueinander angeordnet.

Die in den Fig. 1 bis 6 dargestellte Vorrichtung 1 ist hier im wesentlichen immer auf das Stützrohr 3 aufgesetzt bzw. aufgeschoben, wie von der Seite dargestellt. Hierzu weist die Vorrichtung 1 den Sattelstützrohradapterabschnitt 1a auf. Über die Haltevorrichtung 6 ist die Anordnung des Sattels 2 an dem jeweiligen ersten drehbaren Element 5 realisierbar.

Dabei ist in den Figuren 1 bis 6 eine Ausbildung der unmittelbar, das heißt direkt mit dem drehbaren ersten Element 5 verbundenen Haltevorrichtung 6, das heißt den dieser zugeordneten jeweiligen Schenkeln 6a und 6b, gezeigt, mit welcher lediglich ein einziger spezifischer Durchmesser von Sattelstreben 15 über einen durch die Haltvorrichtung 6 in Zusammenwirken mit dem Element 5 vorgegebenen Abstand eines einzigen Klemmparallelogramms mit zwei Aufnahmen 16a und 16b ermöglicht ist. Dabei kann jedoch die Haltevorrichtung 6 mit Ihren Schenkeln 6a und 6b und entsprechend an seinen von außerhalb des Gehäuses seitlich angreifbaren Stirnseiten auch das Element 5 spiegelsymmetrisch ausgebildet eine zweite Aufnahme 16 (nicht gezeigt) aufweisen bzw. bilden, weiche einen anderen Abstand eines durch diese zweite Aufnahme vorgegebenen zweiten Klemmpapallelogrammes aufweist als das durch die erste Aufnahme 16 gebildete erste Klemmparallelogramm. Jeder Stirnfläche des Elementes 5 sind damit jeweils zwei paarige Aufnahmen 16 für Sattelstreben zugeordnet, welche unterschiedliche Abstände in Ihren Klemmparallelogrammen zur Aufnahme von Sattelstreben unterschiedlichen Durchmessers, beispielsweise von 7 mm und 8 mm, oder aber 9 mm, aufweisen. Aufgrund der erfindungsgemäßen Ausbildung des drehbaren ersten Elementes 5 in vorzugsweise rotationssymmetrischer Form ohne Vorsehung eines Anschlages, auch nicht eines Anschlages bei einer Drehung von 360°, kann daher beispielsweise durch einfache Drehung des drehbaren ersten Elementes in der Ausnehmung 7 des Gehäuses 8 der Vorrichtung 1 um etwa 180° die zweite Aufnahme 16 für die Sattelstreben 15 in eine Position gebracht werden, in welcher ein anderer Sattel 2 mit einem größeren Sattelstrebendurchmesser montierbar ist. Die Aufnahmen 16 können dabei auch ausschließlich in der Haltevorrichtung 6 angeordnet sein, weiche dann mit dem Element 5 verbindbar ist.

Über die Haltevorrichtung 6, die vorzugsweise zwei jeweilige Schenkel 6a bzw. 6b aufweist, die wiederum mit dem jeweiligen ersten drehbaren Element 5, also mit der Drehtrommel 5a, bzw. nicht erfindungsgemäß mit dem Kegel- oder Stimzahnrad 11 bzw. 13, verbindbar ist, ist daher eine einfache Einstellung des Neigungswinkels des Sattels 2 ermöglicht. Hierbei kann die Einstellvorrichtung 4, wie oben beschrieben, entweder vorzugsweise als Einstellschraube 4a oder auch nicht erfindungsgemäß als weiteres Kegelzahnrad 12 bzw. Stimzahnrad 14 ausgebildet sein. In den beiden letzteren Fällen weisen die entsprechenden Kegelzahnrad- bzw. Stirnzahnräder 12 und 14 eine entsprechende Kontaktstelle auf, so dass ein Benutzer das entsprechende Zahnrad drehen kann, um das erste drehbare Element 5 entsprechend zu bewegen, um dann hierdurch den Neigungswinkel des Sattels 2 zu verstellen.

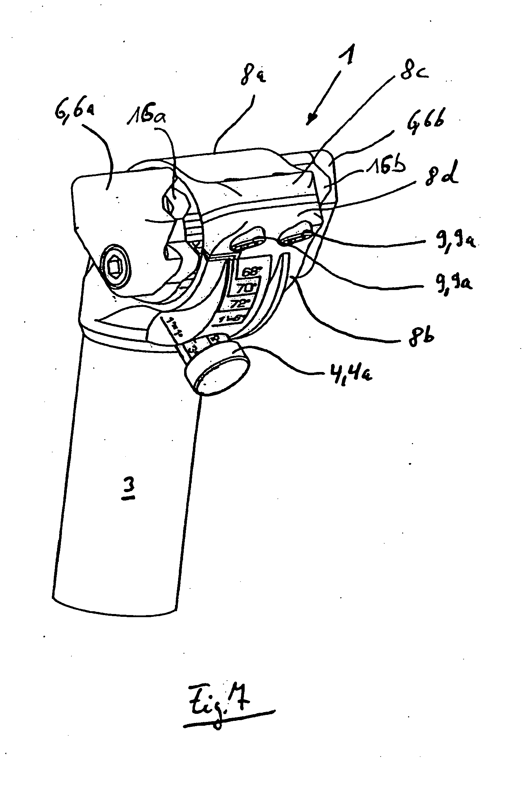

Wesentlich ist, dass die Vorrichtung 1 hier getriebeähnlich ausgebildet ist, also ein erstes drehbares Element 5 und eine Einstellvorrichtung 4 aufweist. Vorzugsweise sind sowohl das drehbare Element 5 wie die Einstellvorrichtung 4 als Getriebekomponenten ausgebildet, weisen insbesondere entsprechend ineinander in Eingriff stehende Gewinde und/oder Zahnradstufen auf. Letzteres ist in dem nicht erfindungsgemäßen Ausführungsformen der Fall, wenn das drehbare Element 5 zahnradförmig, insbesondere als Kegelzahnrad oder Stimzahnrad ausgebildet ist, und von einem weiteren drehbaren Element, nämlich der Einstellvorrichtung 4, vorzugsweise von einem weiteren Kegelzahnrad und/oder Stirnzahnrad, entsprechend betätigt wird. Aufgrund der getriebeähnlichen Ausführung der erfindungsgemäßen Vorrichtung 1, insbesondere als das in den Fig. 1a bis 1c dargestellte Schneckengetriebe, ist eine stufenlose präzise Einstellung des Neigungswinkels des Sattels 2 auch mittels einer aufgebrachten Winkelskala - wie in Fig. 7 dargestellt - ermöglicht, insbesondere wenn die Vorrichtung 1 als selbsthemmendes Schneckengetriebe ausgebildet ist. Denkbar ist auch, dass zwischen der Einstellvorrichtung 4 und dem drehbaren Element 5 weitere Komponenten und/oder zahnradähnliche Elemente vorgesehen sind, insbesondere um das Übersetzungsverhältnis der Einstellvorrichtung und dem drehbaren ersten Element optimal einzustellen. Die spezifische Anordnung dieser einzelnen Komponenten innerhalb des Gehäuses 8 der Vorrichtung 1 kann dann im jeweiligen Anwendungsfall durchaus unterschiedlich sein, insbesondere die spezifische Ausbildung des drehbaren ersten Elementes 5 bzw. der Einstellvorrichtung 4. Dies ist abhängig vom jeweiligen Anwendungsfall.

Schließlich zeigt die Fig. 7 nochmals hier die Vorrichtung 1, montiert auf einem Stützrohr 3. jedoch ohne Sattel 2. Gut zu erkennen ist hier die zweiteilig ausgebildete Haltevorrichtung 6, nämlich die beiden Schenkel 6a und 6b, die mit dem drehbaren ersten Element 5, der Drehtrommel 5a, die in dem Gehäuse 8 gelagert ist, jeweils fest verbunden insbesondere hier mit nicht näher bezeichneten Schrauben befestigt ist. Über die Einsteilvorrichtung 4, vorzugsweise die Einstellschraube 4a, lässt sich das erste drehbare Element 5. also im Endeffekt dann die Schenkel 6a und 6b bewegen, um den hier nicht dargestellten Sattel 2 zu bewegen, d. h. den Neigungswinkel stufenlos einzustellen. Wie die Fig. 7 weiter zeigt, ist hier eine Winkelskala vorgesehen. Diese ist so ausgebildet, dass bei einer vollständigen 360°-Drehung der Einstellschraube 4a der Neigungswinkel des Sattels 2 um 6° verstellt wird. Bei entsprechenden Teildrehungen der Einstellschraube 4a ist eine entsprechende genaue exakte Winkeleinstellung des Sattels 2 möglich, wobei diese Einstellung des Neigungswinkels jederzeit auch wieder reproduzierbar ist. Üblich sind die bei Fahrrädern bekannten Winkel, d.h. der schräge Verlauf des Stützrohres 3, die zwischen 68° und 72° Grad liegen. Auch hier weist die Vorrichtung 1 eine entsprechende Skala am äußeren Rand des Gehäuses 8 auf, um eine entsprechende Winkeleinstellung des Neigungswinkels des Sattels 2 auf besonders einfache Weise im Verhältnis zu dem jeweiligen spezifischen vorhandenen Winkel des Stützrohres 3 zu realisieren.

Im Endeffekt werden daher die Fixierschrauben 9a bei einer Einstellung des Neigungswinkels des Sattels 2 zunächst gelöst, dann der Neigungswinkel des Sattels 2 mit Hilfe der Einstellschraube 4a, insbesondere mit Hilfe der Winkelskala entsprechend eingestellt, wobei dann das erste Element 5 sich mit dem ersten Element 5 die Schenkel 6a und 6b und damit der Sattel 2 verschwenkt wird, um den Neigungswinkel einzustellen. Da die Vorrichtung 1 getriebeähnlich und selbsthemmend ausgebildet, kann der Neigungswinkel des Sattels 2 mit nur einer Hand über vorzugsweise die Einstellschraube 4a eingestellt werden. Hiernach werden dann die Fixierschrauben 9a wieder fixiert, so dass das drehbare Element 5 sicher im Gehäuse 8 bzw. zwischen den Gehäuseteilen 8a und 8b in einer bestimmten Position fixiert ist. Die Wiederholbarkeit der Einstellung eines Neigungswinkels ist damit immer, insbesondere mit Hilfe der Winkelskala exakt reproduzierbar. Vorzugsweise wird die Einstellvorrichtung 4 manuell bedient, denkbar ist aber auch die Einstellung mit einem weiteren Werkzeug, vorzugsweise einem Inbusschlüssel, einem anderen Schraubenschlüssel oder auch einem anderen Werkzeug, das mit der Einstellvorrichtung 4 vorzugsweise in Eingriff gebracht werden kann. Auch eine Nachjustierung des Neigungswinkels des Sattels 2 ist immer problemlos möglich.

Im Ergebnis ist durch die erfindungsgemäße Vorrichtung 1 eine einfache Art und Weise der Einstellung des Neigungswinkels eines Sattels 2 realisiert, wobei die eingangs beschriebenen Nachteile vermieden sind.

### Bezugszeichenliste:

- 1: Vorrichtung
- 1a: Sattelstützrohradapterabschnitt
- 2: Sattel
- 3: Stützrohr
- 4: Einstellvorrichtung
- 4a: Einstellschraube
- 4b: Gewinde
- 4c: Nut
- 5: drehbares erstes Element
- 5a: Drehtrommel
- 5b: Gewinde
- 6: Haltevorrichtung
- 6a: Schenkel
- 6b: Schenkel
- 7: Ausnehmung
- 8: Gehäuse
- 8a: Gehäuseteile
- 8b: Gehäuseteile
- 8c: Flansch
- 8d: Flansch
- 9: Fixiervorrichtung
- 9a: Fixierschrauben
- 10: Sicherungselement
- 11: erstes Kegelzahnrad
- 12: zweites Kegelzahnrad
- 13: erstes Stimzahnrad
- 14: zweites Stimzahnrad
- 15: Sattelstrebe
- 16a: Aufnahme für Sattelstreben
- 16b: Aufnahme für Sattelstreben
- 17: Ausnehmung Gehäuse

## Patentansprüche

1. Vorrichtung (1) zur Winkeleinstellung eines Neigungswinkels eines Sattels (2) vorzugsweise aus Kunststoff und/oder Metall, für Zweiräder, vorzugsweise für Fahrräder, wobei die Vorrichtung (1) zwischen einem Sattel (2) und einem Sattelstützrohr (3) funktional wirksam anordbar ist, die Vorrichtung umfasst: ein drehbares erstes Element (5), das in einer Ausnehmung (7) in einem Gehäuse (8) bewegbar angeordnet ist, eine Haltvorrichtung (6), mittels derer ein Sattel (2) direkt oder indirekt an dem drehbaren ersten Element (5) anordbar ist, und eine Einstellvorrichtung (4), die ein Gewinde (4b) aufweist und mit dem ersten drehbaren Element (5) derart getriebeähnlich zusammenwirkt, dass mit der Vorrichtung (1) eine stufenlose Einstellung des Neigungswinkels eines Sattels (2) ermöglicht wird, wobei der Sitz des drehbaren ersten Elementes (5) in der Ausnehmung (7) im Gehäuse (8) als ein Klemmsitz von zusammenklemmbaren Gehäuseteilen (8a, 8b) des Gehäuses (8) derart ausgebildet ist, dass das erste Element (5) - nach erfolgter Einstellung des Neigungswinkels des Sattels (2) über die Einstellvorrichtung (4) - durch Verklemmen der beiden Gehäuseteile (8a, 8b) mittels einer Fixiervorrichtung (9) in der Ausnehmung (7) des Gehäuses (8) fixiert werden kann, **dadurch gekennzeichnet, dass** das drehbare erste Element (5) rotationssymmetrisch als eine Art Drehtrommel (5a) mit im mittleren Bereich vorgesehenem Gewinde (5b) ausgebildet ist und das Gewinde (4b) der Einstellvorrichtung (4) mit dem Gewinde (5b) des ersten drehbaren Elements (5) in Eingriff steht, wobei das Gewinde der Eingriff der Gewindegänge selbsthemmend ausgebildet ist.

2. Vorrichtung gemäß Anspruch, **dadurch gekennzeichnet, dass** die Einstellvorrichtung (4) als eine mit dem drehbaren ersten Element (5) in Eingriff stehende Einstellschraube (4a) ausgeführt ist.

3. Vorrichtung nach einem der vorhergehenden Ansprüche, **dadurch gekennzeichnet, dass** das Gewinde (4b) der Einstellschraube (4) und das Gewinde (5b) des drehbaren ersten Elementes (5) ein Schneckengetriebe bilden.

4. Vorrichtung nach einem der vorhergehenden Ansprüche, **dadurch gekennzeichnet, dass** die Einstellvorrichtung (4) derart mit einem Sicherungselement (10) gesichert ist, so dass ein komplettes Herausschrauben der Einstellschraube (4) nur bei gelöstem Klemmsitz ermöglicht ist.

5. Vorrichtung nach einem der vorhergehenden Ansprüche, **dadurch gekennzeichnet, dass** die den Klemmsitz bildenden Gehäuseteile (8a, 8b) jeweils einen Flansch (8c, 8d) aufweise, in deren Bereich die zusätzliche Fixiervorrichtung (9) anordbar ist.

6. Vorrichtung nach einem der vorhergehenden Ansprüche, **dadurch gekennzeichnet, dass** die Fixiervorrichtung (9) als mindestens eine, bzw. zwei, die beiden Flansche (8c, 8d) miteinander verbindende Fixierschraube (9a) ausgebildet ist.

7. Vorrichtung nach einem der vorhergehenden Ansprüche, **dadurch gekennzeichnet, dass** eine Winkelskala vorgesehen ist, so dass mit der Einstellvorrichtung (4) der Neigungswinkel exakt einstellbar und/oder auch exakt reproduzierbar ist.

## Claims

1. A device (1) for adjusting an angle of inclination of a seat (2), preferably made of plastic and/or metal, for two-geared means of transport, preferably bicycles, where the device (1) is arranged between the seat (2) and a seat support tube (38) in a functionally efficient manner, the device comprises: a rotatable first element (5), arranged movable in a recess (7) of a housing (8), a holding device (6) by means of which a seat (2) can be arranged directly or indirectly to the rotatable first element (5), and an adjustment device (4) providing a threading (4b) and working in collaboration with the first rotatable element (5) being designed similarly to a transmission such that the device (1) allows continuously regulated adjustment of the angle of inclination of the seat (2), the seat of the rotatable first element (5) in the recess (7) of the housing (8) being designed as a clamp seat of housing parts (8a, 8b) clamped together in such manner that the rotatable first element (5) - after having adjusted the angle of inclination of the seat (2) by means of the adjustment device (4) - can be fixed by clamping the two housing parts (8a, 8b) by means of a fixation device (9) in the recess (7) of the housing (8), **characterized in that** the rotatable first element (5) is designed rotation-symmetrically as a kind of rotating barrel (5a) with a threading (5b) provided in the mid area and the threading (4b) of the adjustment device (4) is engaged with the threading (5b) of the rotatable first element (5), the engagement of the threads being designed self-locking.

2. The device according to claim 1, **characterized in that** the adjustment device (4) is designed as an adjusting screw (4a) which is engaged with the rotatable first element (5).

3. The device according to one of the preceding claims, **characterized in that** the threading (4b) of the adjusting screw (4) and the threading (5b) of the rotatable first element (5) form a worm gear.

4. The device according to one of the preceding claims, **characterized in that** the adjustment device (4) is fastened by means of a fastening element (10) in a manner that the adjusting screw (4) can be loosened completely only if the clamp seat is separated.

5. The device according to one of the preceding claims, **characterized in that** the housing parts (8a, 8b), which form the clamp seat, present in each case a flange (8c, 8d) in whose area an additional fixation device (9) can be arranged.

6. The device according to one of the preceding claims, **characterized in that** the fixation device (9) is designed as at least one, respectively two, fixation screws (9a) which connect the two flanges (8c, 8d) to each other.

7. The device according to one of the preceding claims, **characterized in that** an angle scale is provided so that with the adjustment device (4) the angle of inclination is precisely adjustable and/or also exactly reproducible.

## Revendications

1. Dispositif (1) pour le réglage de l'angle d'inclinaison d'une selle (2), de préférence en matière plastique et/ou en métal pour deux-roues, notamment des bicyclettes, ce dispositif (1) étant disposé de façon fonctionnelle entre la selle (2) et le tube support de la selle (3) et comportant un premier élément rotatif (5) installé mobile dans un évidemment (7) d'un boîtier (8), un dispositif de maintien (6) au moyen duquel la selle (2) peut être montée, directement ou indirectement, sur le premier élément rotatif (5) et un dispositif d'ajustement (4) présentant un filetage (4b) et coopérant avec le premier élément rotatif (5) à la façon d'une transmission de telle façon qu'un réglage continu de l'angle d'inclinaison de la selle (2) au moyen du dispositif soit possible, le siège du premier élément rotatif (5) dans l'évidemment (7) du boîtier (8) étant conformé comme un siège de serrage de parties de boîtier (8a, 8b) pouvant être serrées l'une contre l'autre de telle façon que, une fois le réglage de l'angle d'inclinaison de la selle (2) accompli au moyen du dispositif d'ajustement (4), le premier élément rotatif (5) puisse être bloqué par serrage des deux parties de boîtier (8a, 8b) au moyen d'un dispositif de blocage (9) dans l'évidemment (7) du boîtier (8), **caractérisé en ce que** le premier élément rotatif (5) ait une forme de révolution, comme une sorte de tambour rotatif (5a) avec un filetage (5b) dans la partie médiane et que le filetage (4b) du dispositif d'ajustement (4) engrène en permanence avec le filetage (5b) du premier élément rotatif (5), l'engrènement des filets des deux filetages étant autobloquant.

2. Dispositif selon la revendication 1, **caractérisé en ce que** le dispositif d'ajustement (4) est réalisé comme une vis de réglage (4a) en prise avec le premier élément rotatif (5).

3. Dispositif selon l'une des revendications précédentes, **caractérisé en ce que** le filetage (4b) de la vis de réglage (4) et le filetage (5b) du premier élément rotatif (5) forment un engrenage à vis sans fin.

4. Dispositif selon l'une des revendications précédentes, **caractérisé en ce que** le dispositif d'ajustement (4) est sécurisé avec un élément de sécurité (10) de telle façon qu'un dévissage complet de la vis de réglage (4) ne puisse être effectué que lorsque le siège de serrage est relâché.

5. Dispositif selon l'une des revendications précédentes, **caractérisé en ce que** les parties de boîtier (8a, 8b) formant le siège serrage présentent chacune une bride (8c, 8d) dans la zone de laquelle le dispositif de blocage (9) supplémentaire peut être placé.

6. Dispositif selon l'une des revendications précédentes, **caractérisé en ce que** le dispositif de blocage (9) est formé par au moins une ou deux vis reliant les deux brides (8c, 8d).

7. Dispositif selon l'une des revendications précédentes, **caractérisé en ce qu'**il est prévu un vernier angulaire de sorte que l'angle d'inclinaison puise être exactement réglé et/ou exactement reproduit par le dispositif d'ajustement (4).
